# EUROPEAN PATENT APPLICATION

(11) **EP 4 848 740 A1**
(43) Date of publication of application: **02.12.2026**
(21) Application number: 24927402.8
(22) Date of filing: 26.02.2024
(51) Int. Cl.: H04N 21/854, H04N 21/218, G06T 11/60, G06T 7/70, G06V 20/40

(54) **SERVER FOR PROVIDING VAR IMAGE AND OPERATING METHOD THEREOF**

(71) Applicant: Pixelscope Inc., Seoul 06236 (KR)
(72) Inventor: KWON, Gee Hwan, Yongin-si, Gyeonggi-do 16822 (KR); KOO, Kyung Mo, Seoul 08603 (KR); YEO, Jae Yun, Yongin-si, Gyeonggi-do 16868 (KR)
(74) Representative: Kim Kang, Jae Hee
(86) International application number: PCT/KR2024/002437
(87) International publication number: WO 2025/183229

(57) **Abstract**

Disclosed are a method of providing a VAR video and an electronic device performing the method. An electronic device according to various embodiments may receive a plurality of images from a plurality of cameras, determine, based on the plurality of images, types of objects included in the plurality of images, determine positions of the objects in a pre-generated 3D coordinate system, generate a VAR video based on the determined types of the objects and the determined positions of the objects, and transmit the generated VAR video to an external electronic device.

## Description

### TECHNICAL FIELD

Various embodiments of the present disclosure relate to a server for providing a VAR video and an operating method thereof.

### BACKGROUND ART

In a conventional method of providing a VAR (video assistant referees) video, it takes a long time to produce the VAR video, and the VAR video may not be provided to consumers who consume videos in real time, and thus there is difficulty in quickly providing information to the consumers. In addition, there is a problem in that labor of a video provider is required to produce the VAR video, such as applying editing to a captured video or directly generating an animation by a user.

Therefore, in order to solve the above-described problems, there is a need to provide a method of determining a position of an object and a type of the object by using artificial intelligence, and generating a new VAR video only based on the determined position of the object and the determined type of the object.

### DETAILED DESCRIPTION OF THE INVENTION

### TECHNICAL PROBLEM

An object of the present application is to provide a server for providing a VAR video and an operating method thereof, in order to form a platform for providing a VAR video for automatically assisting a decision.

Problems to be solved by the present application are not limited to the above-described problems, and problems not mentioned herein will be clearly understood from the present specification and the accompanying drawings by those of ordinary skill in the art to which the present application pertains.

### MEANS FOR SOLVING THE PROBLEM

According to various embodiments, a method of operating an electronic device may be provided, the method including: receiving a plurality of images from a plurality of cameras; determining, based on the plurality of images, types of objects included in the plurality of images; determining positions of the objects in a pre-generated 3D coordinate system; generating a VAR video based on the determined types of the objects and the determined positions of the objects; and transmitting the generated VAR video to an external electronic device.

According to various embodiments, a server may be provided, the server including: a communication circuit; a memory; and at least one processor, wherein the at least one processor is implemented to: receive a plurality of images from a plurality of cameras through the communication circuit; determine, based on the plurality of images, types of objects included in the plurality of images; determine positions of the objects in a pre-generated 3D coordinate system; generate a VAR video based on the determined types of the objects and the determined positions of the objects; and transmit the generated VAR video to an external electronic device.

According to various embodiments, a non-transitory recording medium storing at least one program executable by a computer may be provided, wherein, when the at least one program is executed, at least one processor: receives a plurality of images from a plurality of cameras through the communication circuit; determines, based on the plurality of images, types of objects included in the plurality of images; determines positions of the objects in a pre-generated 3D coordinate system; generates a VAR video based on the determined types of the objects and the determined positions of the objects; and transmits the generated VAR video to an external electronic device.

Solutions to the problems are not limited to the above-mentioned solutions, and other solutions not mentioned herein will be clearly understood from the following description by those of ordinary skill in the art to which the present disclosure pertains.

### ADVANTAGEOUS EFFECTS OF THE INVENTION

According to the present invention, a plurality of images may be obtained from a plurality of cameras, and a type of an object and a position of the object included in an image may be determined based on the obtained plurality of images. Accordingly, a VAR video may be generated based on the determined type of the object and the determined position of the object.

In addition, by producing the VAR video in videos of various formats as needed, a VAR video in an appropriate format corresponding to a type of sports may be provided to users who use the VAR, and since the VAR video is generated regardless of editing by a user, there is an advantage in that human resources may be saved.

### BRIEF DESCRIPTION OF THE DRAWINGS

FIG. 1 is a block diagram of a system according to various embodiments.
FIG. 2 is a diagram for describing an example of a system according to various embodiments.
FIG. 3 is a block diagram illustrating an example of a server according to various embodiments.
FIG. 4 is a block diagram illustrating an example of a program according to various embodiments.
FIG. 5 is a block diagram illustrating an example of a user terminal according to various embodiments.
FIG. 6 is a block diagram illustrating an example of a camera module according to various embodiments.
FIG. 7A is a diagram for describing a first camera according to various embodiments.
FIG. 7B is a diagram for describing a second camera according to various embodiments.
FIG. 7C is a diagram for describing a capturing method of a plurality of camera modules according to various embodiments.
FIG. 8 is a flowchart for describing an example of a service in which a server generates a VAR video, according to various embodiments.
FIG. 9 is a flowchart for describing an example of a method in which a server receives a plurality of images from a plurality of camera modules, according to various embodiments.
FIG. 10 is a diagram for describing an example of a method in which a server receives a plurality of images from a plurality of camera modules, according to various embodiments.
FIG. 11 is a flowchart for describing an example of a method in which a server determines a type of an object, according to various embodiments.
FIG. 12 is a diagram for describing a method in which a server determines a type of an object, according to various embodiments.
FIG. 13 is a flowchart for describing a method in which a server determines a position of an object, according to various embodiments.
FIG. 14 is a diagram for describing a method in which a server determines a position of an object, according to various embodiments.
FIG. 15 is a flowchart for describing a method in which a server generates a graphic VAR video, according to various embodiments.
FIG. 16 is a diagram for describing a method in which a server generates a graphic VAR video, according to various embodiments.
FIG. 17 is a flowchart for describing a method in which a server generates an overlapped VAR video, according to various embodiments.
FIG. 18 is a diagram for describing a method in which a server generates an overlapped VAR video, according to various embodiments.
FIG. 19 is a flowchart for describing a method in which a server transmits, to a user terminal, a VAR video for which there is a reception request of a user, according to various embodiments.
FIG. 20 is a diagram for describing a method in which a server transmits, to a user terminal, a VAR video for which there is a reception request of a user, according to various embodiments.
FIG. 21 is a flowchart for describing a method in which a server transmits, to a user terminal, a VAR video based on information associated with the user terminal, according to various embodiments.
FIG. 22 is a diagram for describing a method in which a server transmits, to a user terminal, a VAR video based on information associated with the user terminal, according to various embodiments.

### MODES FOR CARRYING OUT THE INVENTION

The various embodiments of the present document and the terms used herein are not intended to limit the technical features described in the present document to specific embodiments, and should be understood to include various modifications, equivalents, or substitutes of the corresponding embodiments. In connection with the description of the drawings, similar reference numerals may be used for similar or related components. A singular form of a noun corresponding to an item may include one or more of the items, unless the relevant context clearly indicates otherwise. In the present document, each of phrases such as "A or B", "at least one of A and B", "at least one of A or B", "A, B, or C", "at least one of A, B, and C", and "at least one of A, B, or C" may include any one of the items listed together in the corresponding phrase among the phrases, or all possible combinations thereof. Terms such as "first", "second", or "firstly" or "secondly" may be used simply to distinguish a corresponding component from another corresponding component, and do not limit the corresponding components in other aspects (e.g., importance or order). When a certain (e.g., first) component is referred to as being "coupled" or "connected" to another (e.g., second) component, with or without the term "functionally" or "communicatively", it means that the certain component may be connected to the other component directly (e.g., by wire), wirelessly, or through a third component.

The term "module" used in various embodiments of the present document may include a unit implemented in hardware, software, or firmware, and may be used interchangeably with terms such as, for example, logic, logic block, part, or circuit. A module may be an integrally configured part, or a minimum unit of the part or a portion thereof that performs one or more functions. For example, according to an embodiment, the module may be implemented in the form of an application-specific integrated circuit (ASIC).

Various embodiments of the present document may be implemented as software (e.g., a program) including one or more instructions stored in a storage medium (e.g., an internal memory or an external memory) readable by a machine (e.g., an electronic device). For example, a processor (e.g., a processor) of the machine (e.g., the electronic device) may call at least one instruction among the one or more instructions stored in the storage medium, and execute it. This enables the machine to be operated to perform at least one function according to the called at least one instruction. The one or more instructions may include code generated by a compiler or code executable by an interpreter. The machine-readable storage medium may be provided in the form of a non-transitory storage medium. Here, 'non-transitory' merely means that the storage medium is a tangible device and does not include a signal (e.g., an electromagnetic wave), and this term does not distinguish between a case in which data is semi-permanently stored in the storage medium and a case in which data is temporarily stored therein.

According to an embodiment, the method according to various embodiments disclosed in the present document may be provided by being included in a computer program product. The computer program product may be traded as a commodity between a seller and a buyer. The computer program product may be distributed in the form of a machine-readable storage medium (e.g., a compact disc read only memory (CD-ROM)), or may be distributed online (e.g., downloaded or uploaded) through an application store (e.g., Play Store^{™}) or directly between two user devices (e.g., smartphones). In the case of online distribution, at least a part of the computer program product may be at least temporarily stored in a machine-readable storage medium, such as a memory of a server of a manufacturer, a server of an application store, or a relay server, or may be temporarily generated.

According to various embodiments, each component (e.g., a module or a program) of the above-described components may include a singular or plural entity, and some of the plural entities may be separately disposed in another component. According to various embodiments, one or more components or operations among the above-described corresponding components may be omitted, or one or more other components or operations may be added. Alternatively or additionally, a plurality of components (e.g., modules or programs) may be integrated into one component. In this case, the integrated component may perform one or more functions of each component of the plurality of components in the same or similar manner as being performed by the corresponding component among the plurality of components prior to the integration. According to various embodiments, operations performed by a module, a program, or another component may be executed sequentially, in parallel, repeatedly, or heuristically, or one or more of the operations may be executed in a different order or omitted, or one or more other operations may be added.

According to various embodiments, a method of operating an electronic device may be provided, the method including: receiving a plurality of images from a plurality of cameras; determining, based on the plurality of images, types of objects included in the plurality of images; determining positions of the objects in a pre-generated 3D coordinate system; generating a VAR video based on the determined types of the objects and the determined positions of the objects; and transmitting the generated VAR video to an external electronic device.

According to various embodiments, an operating method may be provided, wherein the receiving of the plurality of images includes: receiving first images obtained by using a plurality of fixed first cameras; and receiving second images obtained by using a plurality of second cameras, and the plurality of second cameras are operated by a control signal transmitted from the electronic device.

According to various embodiments, an operating method may be provided, wherein the generating of the VAR video includes generating a graphic video based on the type of the object and the position of the object.

According to various embodiments, an operating method may be provided, wherein the generating of the VAR video includes generating a video in which an auxiliary object is overlapped on at least one image among the received plurality of images.

According to various embodiments, an operating method may be provided, wherein the VAR video includes analysis data associated with the object.

According to various embodiments, an operating method may be provided, wherein, when the position of the object is included in a set area, the plurality of second cameras perform capturing to include the set area.

According to various embodiments, a server may be provided, the server including a communication circuit, a memory, and at least one processor, wherein the at least one processor is implemented to: receive a plurality of images from a plurality of cameras through the communication circuit; determine, based on the plurality of images, types of objects included in the plurality of images; determine positions of the objects in a pre-generated 3D coordinate system; generate a VAR video based on the determined types of the objects and the determined positions of the objects; and transmit the generated VAR video to an external electronic device.

According to various embodiments, a server may be provided, wherein the at least one processor is implemented to, as at least a part of the receiving of the plurality of images: receive first images obtained by using a plurality of fixed first cameras; and receive second images obtained by using a plurality of second cameras, and the plurality of second cameras are operated by a control signal transmitted from the electronic device.

According to various embodiments, a server may be provided, wherein the at least one processor is implemented to, as at least a part of the generating of the VAR video, generate a graphic video based on the type of the object and the position of the object.

According to various embodiments, a server may be provided, wherein the at least one processor is implemented to, as at least a part of the generating of the VAR video, generate a video in which an auxiliary object is overlapped on at least one image among the received plurality of images.

According to various embodiments, a server may be provided, wherein the VAR video includes analysis data associated with the object.

According to various embodiments, a server may be provided, wherein, when the position of the object is included in a set area, the plurality of second cameras perform capturing to include the set area.

According to various embodiments, a non-transitory recording medium storing at least one program executable by a computer may be provided, wherein, when the at least one program is executed, at least one processor: receives a plurality of images from a plurality of cameras through the communication circuit; determines, based on the plurality of images, types of objects included in the plurality of images; determines positions of the objects in a pre-generated 3D coordinate system; generates a VAR video based on the determined types of the objects and the determined positions of the objects; and transmits the generated VAR video to an external electronic device.

According to various embodiments, the system 10 may be a system 10 implemented to receive, by using the server 100, a plurality of images (e.g., first images and second images) from a plurality of camera modules 300, determine, from the plurality of images (e.g., a first image 1000a and a second image 1000b), types of objects (e.g., a type 1200 of a first object and a type 1210 of a second object) and positions of the objects (a position 1420 of the first object and a position 1430 of the second object), and generate a VAR video (e.g., a graphic VAR video 1600a, an overlapped VAR video 1600b, or a changed VAR video (e.g., a first VAR video 2200a or a second VAR video 2200b)) based on the types of the objects (the type 1200 of the first object and the type 1210 of the second object) and the positions of the objects (the position 1410 of the first object and the position 1420 of the second object).

The object 700 may include a person (e.g., a player, a referee, or a spectator), an article (e.g., a ball, a racket, or a goalpost), and/or a field (e.g., a sports field or an indoor gymnasium) included in the plurality of images (e.g., the first image 1000a and the second image 1000b), but is not limited to the described examples, and may include an object required to produce a VAR video of various types of sports. Hereinafter, an example of the system 10 according to various embodiments will be further described.

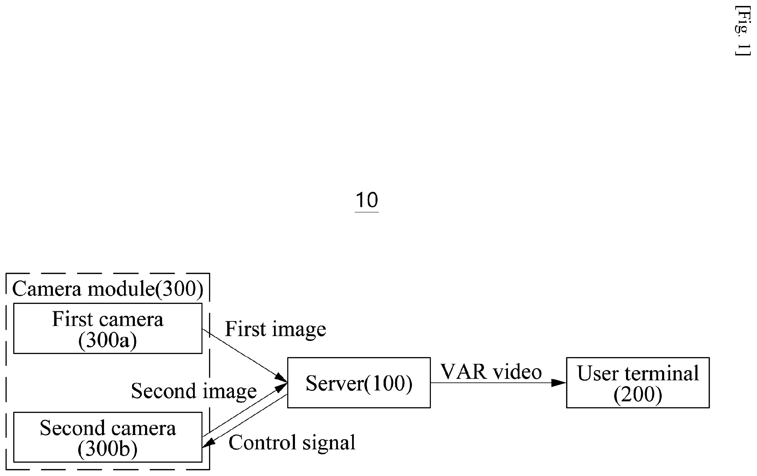

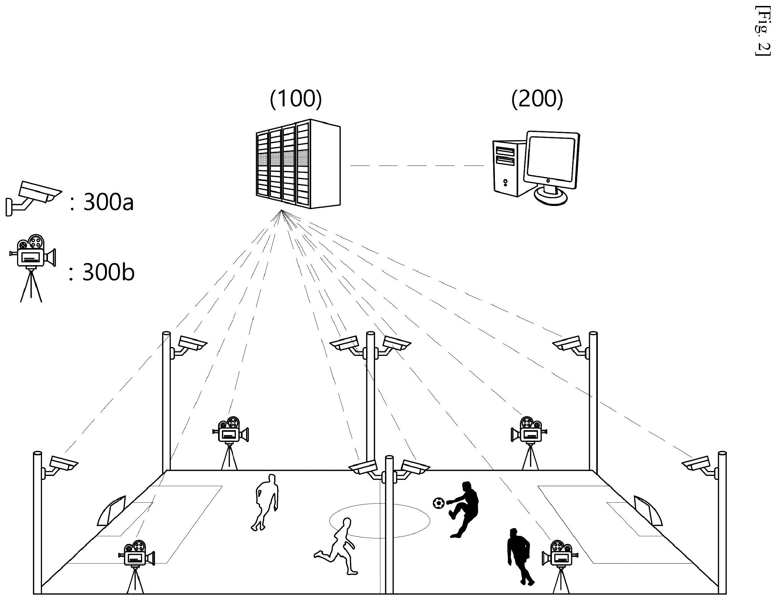

FIG. 1 is a block diagram for describing an example of a system 10 according to various embodiments. Hereinafter, FIG. 1 will be described with reference to FIG. 2.

FIG. 2 is a diagram for describing an example of the system 10 according to various embodiments.

Referring to FIG. 1, the system 10 may include a server 100, a user terminal 200, and camera modules 300 (e.g., first cameras 300a-1 and 300a-2 and second cameras 300b-1 and 300b-2). The server 100, the user terminal 200, and/or the camera modules 300 (e.g., the first cameras 300a-1 and 300a-2 and the second cameras 300b-1 and 300b-2) included in the system 10 may transmit/receive a plurality of images (e.g., a first image 1000a and a second image 1000b) and/or a VAR video (e.g., a graphic VAR video 1600a, an overlapped VAR video 1600b, or a changed VAR video (e.g., a first VAR video 2200a or a second VAR video 2200b)) or provide a predetermined service, based on activation of a communication function with each other.

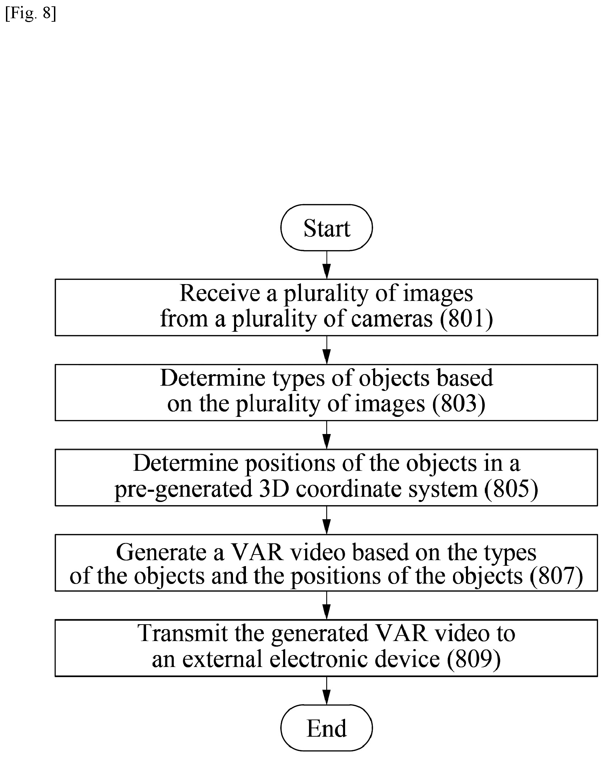

According to various embodiments, referring to FIG. 2, the server 100 may receive a plurality of images (e.g., the first image 1000a and the second image 1000b) from the camera modules 300 (e.g., the first cameras 300a-1 and 300a-2 and the second cameras 300b-1 and 300b-2), store the plurality of images in the server 100, and determine, by using the plurality of images (e.g., the first image 1000a and the second image 1000b), the types of the objects (e.g., the type 1200 of the first object and the type 1210 of the second object) and the positions of the objects (the position 1410 of the first object and the position 1420 of the second object). In addition, the server 100 may generate a VAR video (e.g., the graphic VAR video 1600a, the overlapped VAR video 1600b, or the changed VAR video (e.g., the first VAR video 2200a or the second VAR video 2200b)) by using the types of the objects (e.g., the type 1200 of the first object and the type 1210 of the second object) and the positions of the objects (the position 1410 of the first object and the position 1420 of the second object). Detailed operations of the server 100 will be described later with reference to FIGS. 8 to 22.

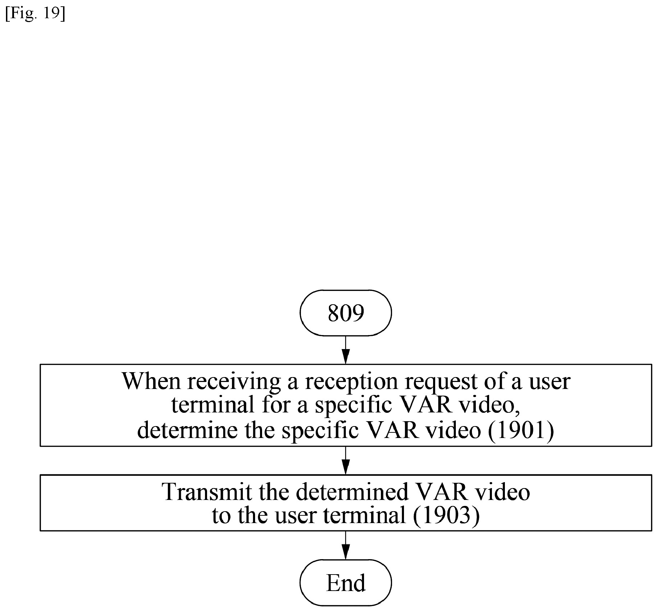

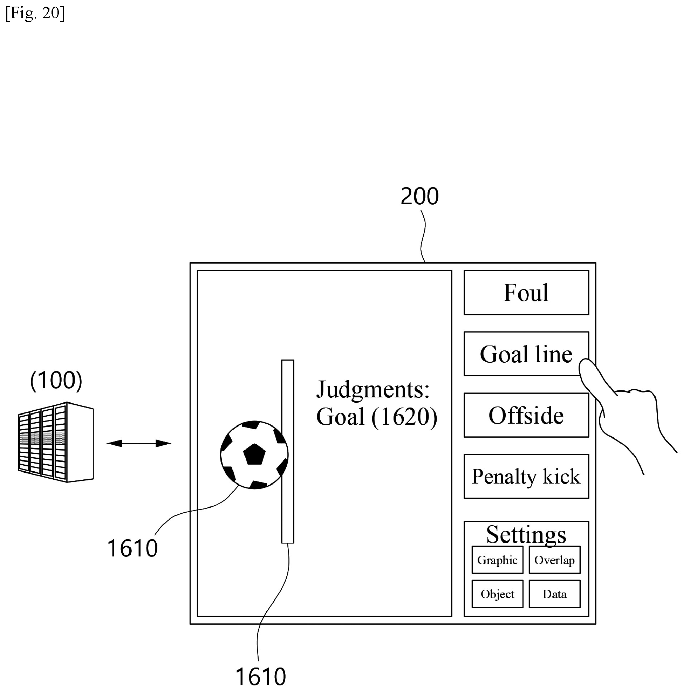

According to various embodiments, the user terminal 200 may be a user terminal 200 of a producer (or a consumer) of a VAR video (e.g., the graphic VAR video 1600a, the overlapped VAR video 1600b, or the changed VAR video (e.g., the first VAR video 2200a or the second VAR video 2200b)). The user terminal 200 may receive a VAR video (e.g., the graphic VAR video 1600a, the overlapped VAR video 1600b, or the changed VAR video (e.g., the first VAR video 2200a or the second VAR video 2200b)) from the server 100 and play the VAR video (e.g., the graphic VAR video 1600a, the overlapped VAR video 1600b, or the changed VAR video (e.g., the first VAR video 2200a or the second VAR video 2200b)). For example, the user terminal 200 may receive a plurality of VAR videos (e.g., the graphic VAR video 1600a, the overlapped VAR video 1600b, or the changed VAR video (e.g., the first VAR video 2200a or the second VAR video 2200b)) and transmit, to the server 100, a request for playing at least one VAR video (e.g., the graphic VAR video 1600a, the overlapped VAR video 1600b, or the changed VAR video (e.g., the first VAR video 2200a or the second VAR video 2200b)) among the plurality of VAR videos (e.g., the graphic VAR video 1600a, the overlapped VAR video 1600b, or the changed VAR video (e.g., the first VAR video 2200a or the second VAR video 2200b)). For example, an interface for requesting playback of at least one VAR video (e.g., the graphic VAR video 1600a, the overlapped VAR video 1600b, or the changed VAR video (e.g., the first VAR video 2200a or the second VAR video 2200b)) may be provided on a display 250 of the user terminal 200 by using an application 240 installed in the user terminal 200. Detailed operations of the user terminal 200 will be described later with reference to FIGS. 19 and 20.

In addition, the user terminal 200 may transmit, to the server 100, a request for changing at least one VAR video (e.g., the graphic VAR video 1600a, the overlapped VAR video 1600b, or the changed VAR video (e.g., the first VAR video 2200a or the second VAR video 2200b)) among the plurality of VAR videos (e.g., the graphic VAR video 1600a, the overlapped VAR video 1600b, or the changed VAR video (e.g., the first VAR video 2200a or the second VAR video 2200b)). In this case, an interface for requesting a change of at least one VAR video (e.g., the graphic VAR video 1600a, the overlapped VAR video 1600b, or the changed VAR video (e.g., the first VAR video 2200a or the second VAR video 2200b)) may be provided on the display 250 of the user terminal 200 by using the application 240 installed in the user terminal 200. Detailed operations of the user terminal 200 will be described later with reference to FIGS. 19 and 20.

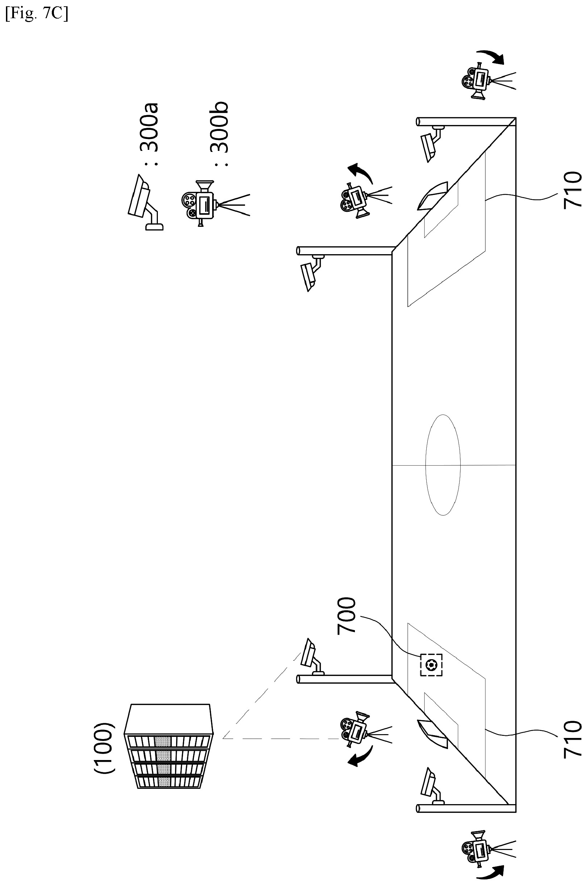

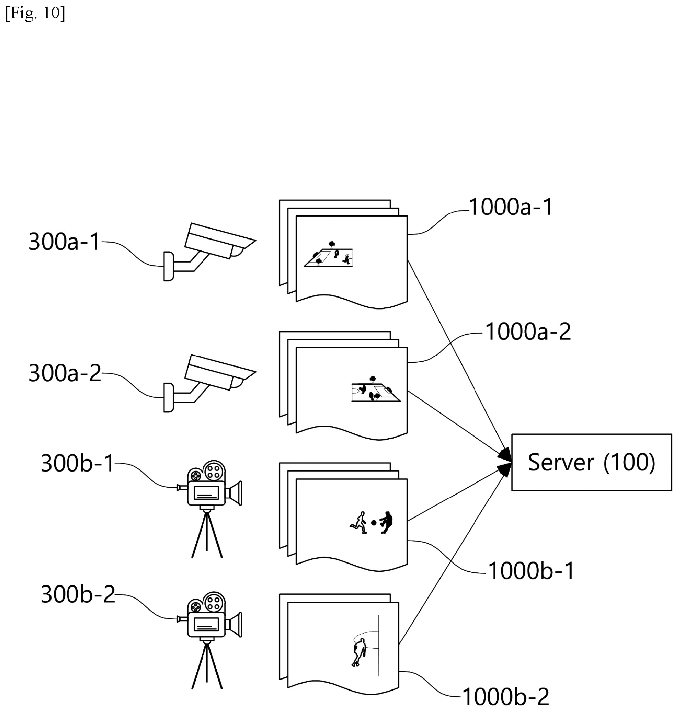

According to various embodiments, referring to FIG. 2, the plurality of camera modules 300 (e.g., the first cameras 300a-1 and 300a-2 and the second cameras 300b-1 and 300b-2) may capture a plurality of images (e.g., the first image 1000a and the second image 1000b) and transmit the plurality of images to the server 100. Details of operations of the plurality of camera modules 300 (e.g., the first cameras 300a-1 and 300a-2 and the second cameras 300b-1 and 300b-2) will be described later with reference to FIG. 7C. Details of the plurality of images (e.g., the first image 1000a and the second image 1000b) will be described later with reference to FIG. 10.

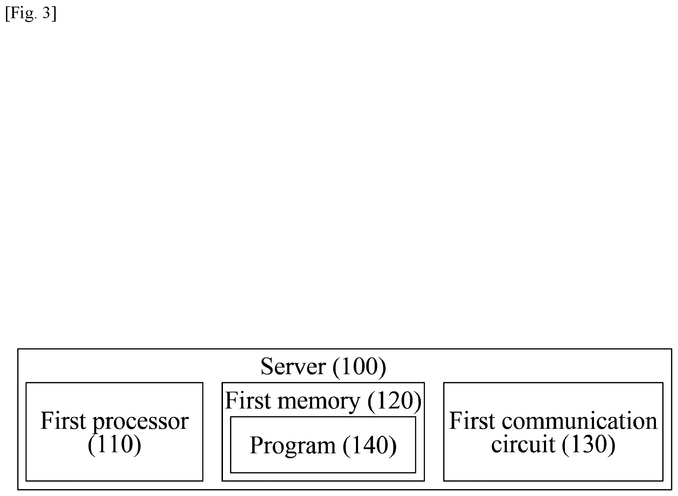

FIG. 3 is a block diagram illustrating an example of the server 100 according to various embodiments.

According to various embodiments, the server 100 may include a first processor 110, a first memory 120 including a program 140, and a first communication circuit 130. However, the server 100 is not limited to the described and/or illustrated examples, and may be implemented to include more devices and/or fewer devices.

According to various embodiments, the first processor 110 may, for example, execute software (e.g., the program 140) to control at least one other component (e.g., a hardware or software component) of the electronic device 101 connected to the first processor 110, and may perform various data processing or computations. According to an embodiment, as at least a part of the data processing or computations, the first processor 110 may store, in the volatile first memory 120, a command or data received from another component (e.g., a VAR video generation module 146 or a VAR video determination module 147), process the command or data stored in the first memory 120, and store resulting data in the first memory 120. According to an embodiment, the first processor 110 may include a main processor (not illustrated) (e.g., a central processing unit or an application processor), or an auxiliary processor (not illustrated) (e.g., a graphics processing unit, a neural processing unit (NPU), an image signal processor, a sensor hub processor, or a communication processor) that is operable independently of or together with the main processor. For example, when the first processor 110 includes the main processor (not illustrated) and the auxiliary processor (not illustrated), the auxiliary processor (not illustrated) may be set to use less power than the main processor (not illustrated) or to be specialized for a designated function. The auxiliary processor (not illustrated) may be implemented separately from the main processor (not illustrated) or as a part thereof.

The auxiliary processor (not illustrated) may, for example, control at least a part of functions or states related to at least one component (e.g., the first memory 120 or the first communication circuit 130) among the components of the server 100, in place of the main processor (not illustrated) while the main processor (not illustrated) is in an inactive (e.g., sleep) state, or together with the main processor (not illustrated) while the main processor (not illustrated) is in an active (e.g., application execution) state. According to an embodiment, the auxiliary processor (not illustrated) (e.g., an image signal processor or a communication processor) may be implemented as a part of another component (e.g., a camera module (not illustrated)) that is functionally related thereto. According to an embodiment, the auxiliary processor (not illustrated) (e.g., a neural processing unit) may include a hardware structure specialized for processing of an artificial intelligence model. The artificial intelligence model may be generated through machine learning. Such learning may be performed, for example, in the server 100 itself in which the artificial intelligence is performed, or may be performed through a separate server. A learning algorithm may include, for example, supervised learning, unsupervised learning, semi-supervised learning, or reinforcement learning, but is not limited to the above-described examples. The artificial intelligence model may include a plurality of artificial neural network layers. An artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-networks, or a combination of two or more thereof, but is not limited to the above-described examples. The artificial intelligence model may additionally or alternatively include a software structure in addition to the hardware structure.

According to various embodiments, the first memory 120 may store various data used by at least one component (e.g., the processor 110) of the server 100. The data may include, for example, software (e.g., the program 140), and input data or output data for a command related thereto. The first memory 120 may include a volatile memory (not illustrated) or a non-volatile memory (not illustrated).

According to various embodiments, the program 140 may be stored as software in the first memory 120, and when executed, may cause the first processor 110 to perform at least one operation. Examples of functions provided by the program 140 will be described later, and operations of modules of the program 140 may be understood as operations of the first processor 110 based on execution of the program 140.

According to various embodiments, the first communication circuit 130 may support establishment of a direct (e.g., wired) communication channel or a wireless communication channel between the server 100 and an external electronic device (e.g., the user terminal 200 or the camera modules 300 (e.g., the first cameras 300a-1 and 300a-2 and the second cameras 300b-1 and 300b-2)), and performance of communication through the established communication channel. The first communication circuit 130 may be operated independently of the first processor 110, and may include one or more communication processors supporting direct (e.g., wired) communication or wireless communication. According to an embodiment, the first communication circuit 130 may include a wireless communication module (not illustrated) (e.g., a cellular communication module, a short-range wireless communication module, or a global navigation satellite system (GNSS) communication module) or a wired communication module (not illustrated) (e.g., a local area network (LAN) communication module or a power line communication module). A corresponding communication module among these communication modules may communicate with an external electronic device (e.g., the user terminal 200) through a first network (not illustrated) (e.g., a short-range communication network such as Bluetooth, wireless fidelity (WiFi) direct, or infrared data association (IrDA)) or a second network (not illustrated) (e.g., a long-range communication network such as a legacy cellular network, a 5G network, a next-generation communication network, the Internet, or a computer network (e.g., a LAN or a WAN)). These various types of communication modules may be integrated into one component (e.g., a single chip), or may be implemented as a plurality of components (e.g., a plurality of chips) separate from each other. The wireless communication module (not illustrated) may identify or authenticate the server 100 in a communication network such as the first network (not illustrated) or the second network (not illustrated) by using subscriber information (e.g., an international mobile subscriber identity (IMSI)) stored in a subscriber identification module (not illustrated).

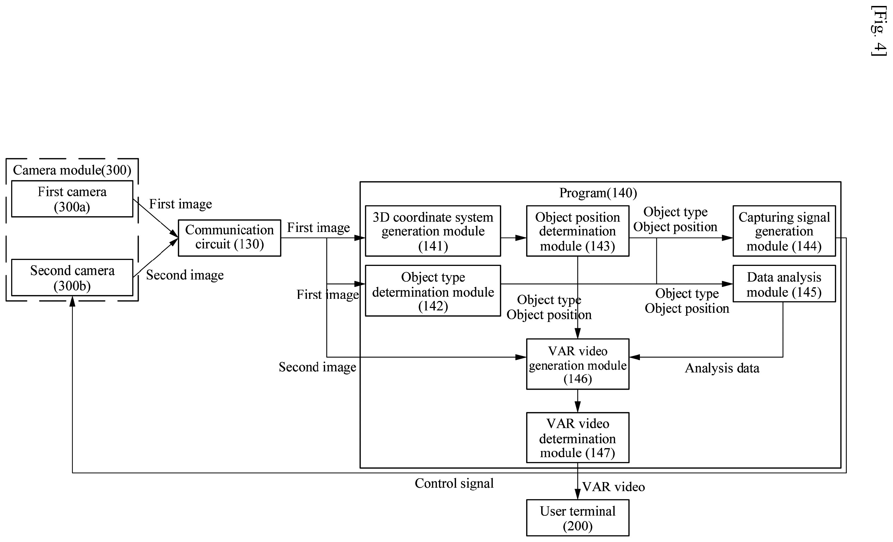

FIG. 4 is a block diagram illustrating an example of the program 140 according to various embodiments.

According to various embodiments, the program 140 may include a 3D coordinate system generation module 141, an object type generation module 142, an object position determination module 143, a capturing signal generation module 144, a data analysis module 145, a VAR video generation module 146, and/or a VAR video determination module 147. The plurality of modules may be implemented as executable computer code, instructions, and/or an API.

According to various embodiments, the 3D coordinate system generation module 141 may obtain a plurality of first images 1000a-1 and 1000a-2 from the camera modules 300 (e.g., the first cameras 300a-1 and 300a-2 and the second cameras 300b-1 and 300b-2) by using the communication circuit 130. In this case, the 3D coordinate system generation module 141 may generate a virtual 3D coordinate system by using the plurality of first images 1000a-1 and 1000a-2. For example, 2D coordinates of the plurality of first images 1000a-1 and 1000a-2 may be obtained by using capturing positions of the plurality of first images 1000a-1 and 1000a-2. In this case, a reference point 1410 may be determined, and a virtual 3D coordinate system for the plurality of first images 1000a-1 and 1000a-2 may be generated by using distances between the 2D coordinates. However, the generation is not limited to the described generation example, and more various generation methods may be included.

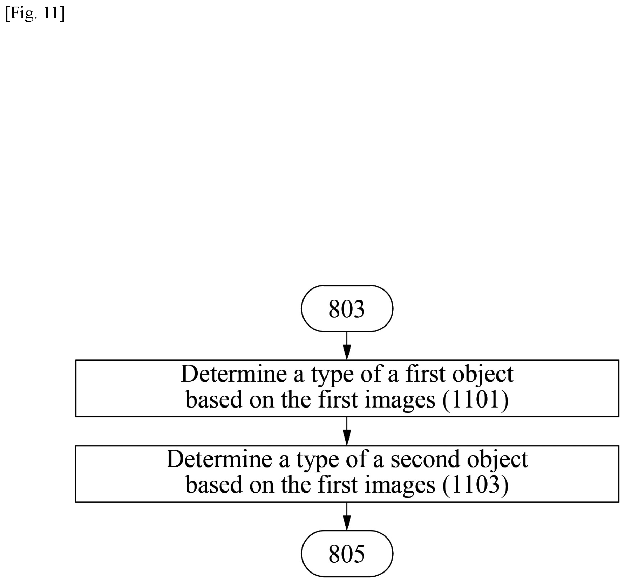

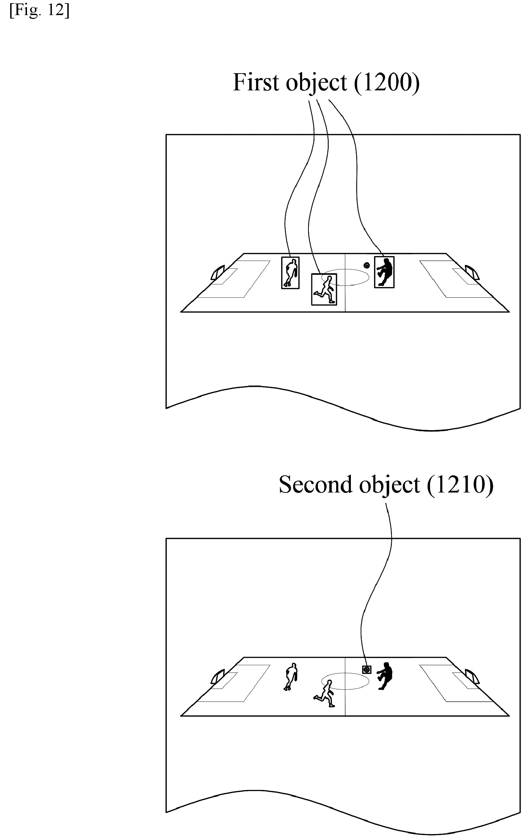

According to various embodiments, the object type determination module 142 may determine a type of an object (e.g., the type 1200 of the first object and the type 1210 of the second object) based on the plurality of first images 1000a-1 and 1000a-2. For example, the object type determination module 142 may determine the type 1200 of the first object by using a first artificial intelligence model with the plurality of first images 1000a-1 and 1000a-2, and determine the type 1210 of the second object by using a second artificial intelligence model with the plurality of first images 1000a-1 and 1000a-2. As another example, the object type determination module 142 may determine the type 1200 of the first object and the type 1210 of the second object by using a third artificial intelligence model. However, the determination is not limited to the described determination methods for determining the type of the object (e.g., the type 1200 of the first object and the type 1210 of the second object), and more various determination methods may be included. Details of an operation for determining the type of the object (e.g., the type 1200 of the first object and the type 1210 of the second object) will be described later with reference to FIGS. 11 and 12.

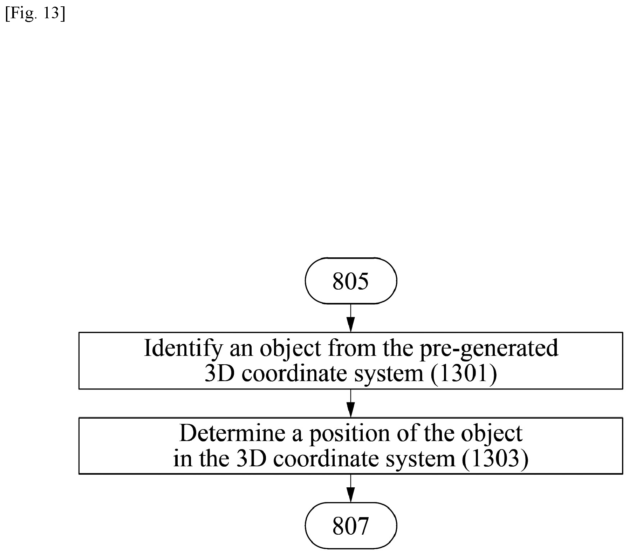

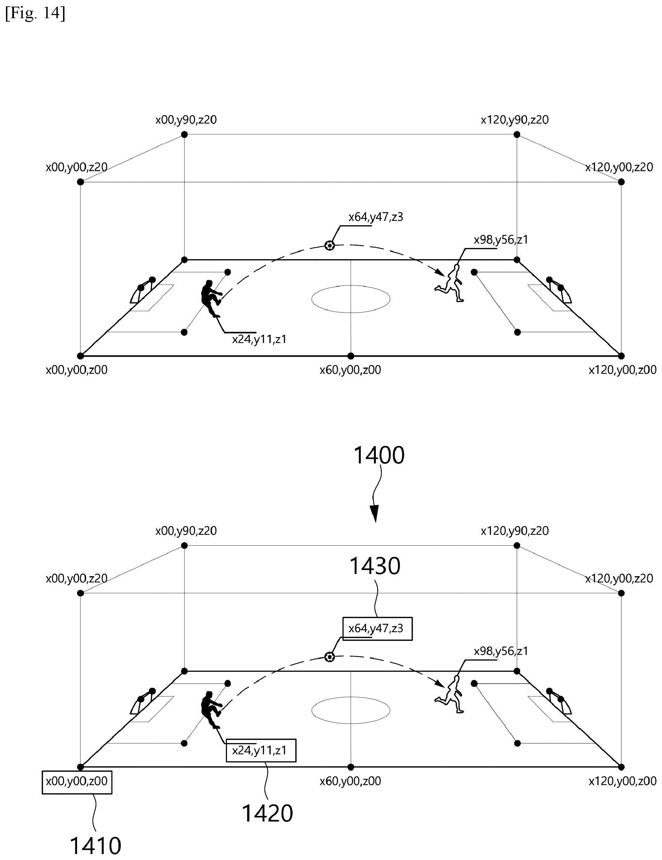

According to various embodiments, the object position determination module 143 may determine a position of an object (e.g., the position 1420 of the first object and the position 1430 of the second object) in a pre-generated 3D coordinate system 1400. For example, the object position determination module 143 may identify the object 700 in the 3D coordinate system 1400 and match coordinates corresponding to the 3D coordinate system to determine the position of the object (e.g., the position 1420 of the first object and the position 1430 of the second object). However, the determination is not limited to the method for determining the position of the object (e.g., the position 1420 of the first object and the position 1430 of the second object), and more various determination methods may be included. An operation for determining the position of the object (e.g., the position 1420 of the first object and the position 1430 of the second object) will be described later with reference to FIGS. 13 and 14.

According to various embodiments, the capturing signal generation module 144 may receive the type of the object (e.g., the type 1200 of the first object and the type 1210 of the second object) and the position of the object (e.g., the position 1410 of the first object and the position 1420 of the second object), and transmit a capturing control signal to the second cameras 300b-1 and 300b-2 based on the received type of the object (e.g., the type 1200 of the first object and the type 1210 of the second object) and the received position of the object (e.g., the position 1410 of the first object and the position 1420 of the second object). For example, the capturing signal generation module 144 may predict a movement path of the object 700 by using the type of the object (e.g., the type 1200 of the first object and the type 1210 of the second object) and the position of the object (e.g., the position 1410 of the first object and the position 1420 of the second object), and transmit, to the second cameras 300b-1 and 300b-2, a capturing control signal for producing a natural video according to the movement path. However, the transmission is not limited to the operation of transmitting the capturing signal by using the type of the object (e.g., the type 1200 of the first object and the type 1210 of the second object) and the position of the object (e.g., the position 1410 of the first object and the position 1420 of the second object), and capturing signal transmission operations for more various purposes may be included.

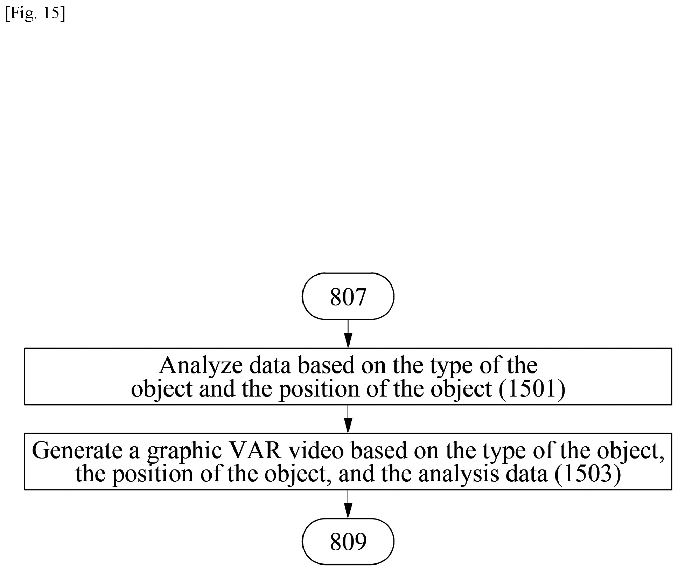

According to various embodiments, the data analysis module 145 may analyze data by using the type of the object (e.g., the type 1200 of the first object and the type 1210 of the second object) and the position of the object (e.g., the position 1410 of the first object and the position 1420 of the second object). For example, the data analysis module 145 may obtain the type of the object (e.g., the type 1200 of the first object and the type 1210 of the second object) and the position of the object (e.g., the position 1410 of the first object and the position 1420 of the second object), determine a positional relationship between positions of a plurality of objects (e.g., the position 1410 of the first object and the position 1420 of the second object), and analyze a decision result according to a set rule or a behavior of the object 700 through the determined positional relationship. However, the analysis is not limited to the operation of analyzing data by using the type of the object (e.g., the type 1200 of the first object and the type 1210 of the second object) and the position of the object (e.g., the position 1410 of the first object and the position 1420 of the second object), and various operations for analyzing data may be included. Detailed operations of the data analysis module 145 will be described later with reference to FIGS. 15 to 18.

According to various embodiments, the VAR video generation module 146 may generate a VAR video (e.g., the graphic VAR video 1600a, the overlapped VAR video 1600b, or the changed VAR video (e.g., the first VAR video 2200a or the second VAR video 2200b)) by using the type of the object (e.g., the type 1200 of the first object and the type 1210 of the second object) and the position of the object (e.g., the position 1410 of the first object and the position 1420 of the second object). For example, the VAR video generation module 146 may generate the graphic VAR video 1600a by using the type of the object (e.g., the type 1200 of the first object and the type 1210 of the second object) and the position of the object (e.g., the position 1410 of the first object and the position 1420 of the second object). The graphic VAR video 1600a may be a computer graphics video generated regardless of the first images 1000a-1 and 1000a-2 or the second images 1000b-1 and 1000b-2 obtained from the camera modules 300 (e.g., the first cameras 300a-1 and 300a-2 and the second cameras 300b-1 and 300b-2). In addition, the VAR video generation module 146 may generate an overlapped VAR video by using the type of the object (e.g., the type 1200 of the first object and the type 1210 of the second object) and the position of the object (e.g., the position 1410 of the first object and the position 1420 of the second object). The overlapped VAR video 1600b may be a video generated by overlapping an auxiliary object 1720, based on a set rule or behavior, on the first images 1000a-1 and 1000a-2 or the second images 1000b-1 and 1000b-2 obtained from the camera modules 300 (e.g., the first cameras 300a-1 and 300a-2 and the second cameras 300b-1 and 300b-2). In addition, the VAR video generation module 146 may change the VAR video (e.g., the graphic VAR video 1600a, the overlapped VAR video 1600b, or the changed VAR video (e.g., the first VAR video 2200a or the second VAR video 2200b)) to generate a new VAR video (e.g., the graphic VAR video 1600a, the overlapped VAR video 1600b, or the changed VAR video (e.g., the first VAR video 2200a or the second VAR video 2200b)). Details of operations of the VAR video generation module 146 will be described later with reference to FIGS. 15 to 22.

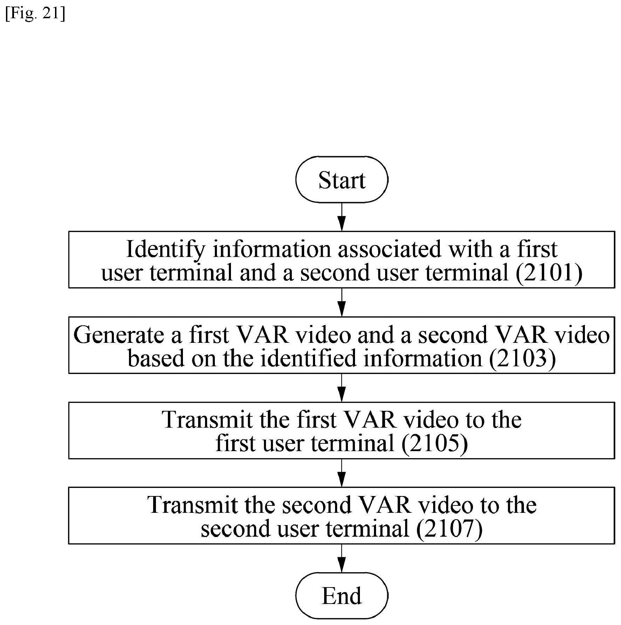

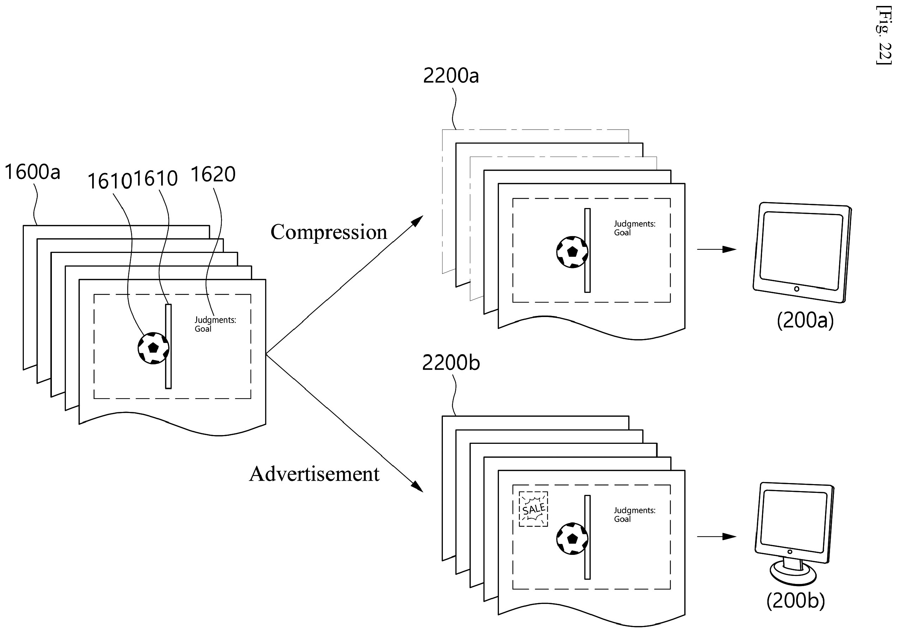

According to various embodiments, the VAR video determination module 147 may determine a VAR video to be transmitted to the user terminal 200. For example, the VAR video determination module 147 may determine at least one VAR video (e.g., the graphic VAR video 1600a, the overlapped VAR video 1600b, or the changed VAR video (e.g., the first VAR video 2200a or the second VAR video 2200b)) among a plurality of VAR videos (e.g., the graphic VAR video 1600a, the overlapped VAR video 1600b, or the changed VAR video (e.g., the first VAR video 2200a or the second VAR video 2200b)), based on at least one element of network available resources of the user terminal 200, hardware information of the user terminal 200, or whether the user terminal 200 subscribes to a program. However, the determination is not limited to the elements for determining the VAR video (e.g., the graphic VAR video 1600a, the overlapped VAR video 1600b, or the changed VAR video (e.g., the first VAR video 2200a or the second VAR video 2200b)), and various elements may be included. Operations of the VAR video determination module 147 will be described later with reference to FIGS. 21 and 22.

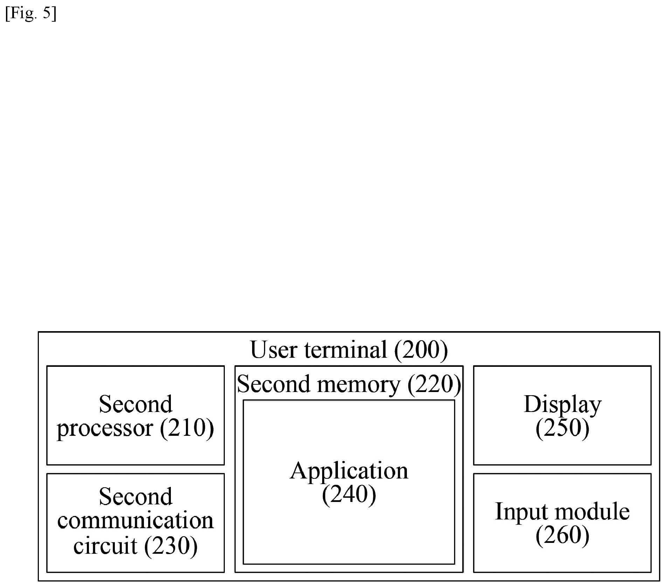

FIG. 5 is a block diagram illustrating an example of the user terminal 200 according to various embodiments.

According to various embodiments, the user terminal 200 may include a second processor 210, a second communication circuit 220, a second memory 230, an application 240 stored in the second memory, a display 250, and an input module 260. However, the user terminal 200 is not limited to the described and/or illustrated examples, and may be implemented to include more devices and/or fewer devices.

According to various embodiments, each of the second processor 210, the second communication circuit 220, and the second memory 230 may be implemented in the same manner as the above-described first processor 110, first communication circuit 130, and first memory 120, and thus redundant descriptions will be omitted.

According to various embodiments, the application 240 may be implemented in various forms. In an embodiment, when the application 240 is implemented as an on-device type, the application 240 may be implemented to perform operations similar to and/or the same as the operations of the above-described program 140. In another embodiment, when the application 240 is implemented as a server type, the application 240 may be implemented to simply include a function of receiving a VAR video, and/or a function of transmitting, to the server 100, a request for changing a VAR video (e.g., the graphic VAR video 1600a, the overlapped VAR video 1600b, or the changed VAR video (e.g., the first VAR video 2200a or the second VAR video 2200b)). Accordingly, based on the above-described program 140 being executed in a server, as a VAR video (e.g., the graphic VAR video 1600a, the overlapped VAR video 1600b, or the changed VAR video (e.g., the first VAR video 2200a or the second VAR video 2200b)) received from the server 100 is provided through the application 240, transmission of at least one of a plurality of VAR videos (e.g., the graphic VAR video 1600a, the overlapped VAR video 1600b, or the changed VAR video (e.g., the first VAR video 2200a or the second VAR video 2200b)) may be performed to the server 100.

According to various embodiments, the display 250 may visually provide information to the outside (e.g., a user) of the user terminal 200. The display 250 may include, for example, a display, a hologram device, or a projector, and a control circuit for controlling the corresponding device. According to an embodiment, the display 250 may include a touch sensor set to sense a touch, or a pressure sensor set to measure an intensity of a force generated by the touch.

The input module 260 may receive, from the outside (e.g., a user) of the user terminal 200, a command or data to be used by a component (e.g., the second processor 210) of the user terminal 200. The input module 260 may include, for example, a microphone, a mouse, a keyboard, a key (e.g., a button), or a digital pen (e.g., a stylus pen).

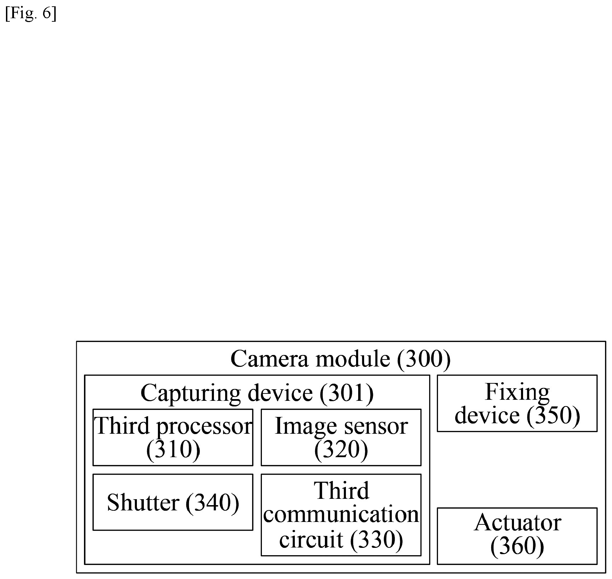

FIG. 6 is a block diagram illustrating an example of the camera module 300 (e.g., the first cameras 300a-1 and 300a-2 and the second cameras 300b-1 and 300b-2) according to various embodiments.

According to various embodiments, the camera module 300 (e.g., the first cameras 300a-1 and 300a-2 and the second cameras 300b-1 and 300b-2) may include a capturing device 301, a fixing device 350, and an actuator 360.

According to various embodiments, the capturing device 301 may include a third processor 310, an image sensor 320, a shutter 340, and a third communication circuit 330.

According to various embodiments, the capturing device 301 may capture a plurality of images (e.g., the first images 1000a-1 and 1000a-2 and the second images 1000b-1 and 1000b-2), and transmit the plurality of images (e.g., the first images 1000a-1 and 1000a-2 and the second images 1000b-1 and 1000b-2) to the server 100 by using the third communication circuit 330.

According to various embodiments, each of the third processor 310 and the second communication circuit 330 may be implemented in the same manner as the above-described first processor 110 and first communication circuit 130, and thus redundant descriptions will be omitted.

According to various embodiments, the image sensor 320 may generate a plurality of images (e.g., the first images 1000a-1 and 1000a-2 and the second images 1000b-1 and 1000b-2) by converting an intensity of light into an electrical signal.

According to various embodiments, the shutter 340 may adjust sharpness of a plurality of images (e.g., the first images 1000a-1 and 1000a-2 and the second images 1000b-1 and 1000b-2) by adjusting a speed thereof. For example, in order to obtain an accurate position of an object (e.g., the position 1410 of the first object and the position 1420 of the second object), when the object 700 is in a set area 710, the shutter 340 may perform capturing by increasing the speed of the shutter 340 in the set area 710.

According to various embodiments, the fixing device 350 may fix the capturing device 301 to designate a capturing direction and a capturing angle.

According to various embodiments, the actuator 360 may move the capturing device 301 to change the capturing direction and the capturing angle.

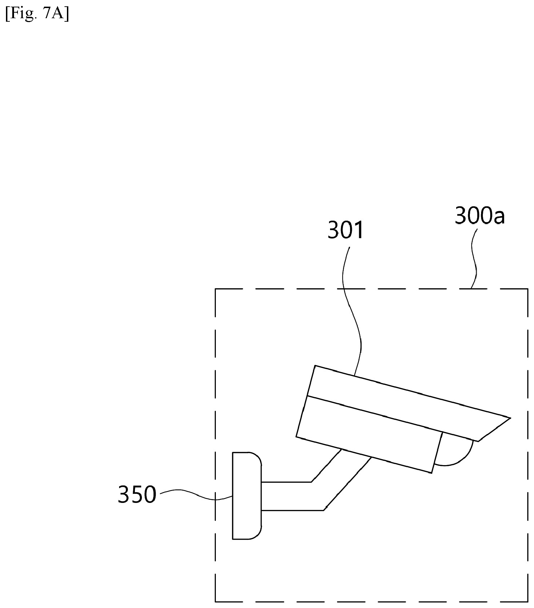

FIG. 7A is a diagram for describing the first cameras 300a-1 and 300a-2 according to various embodiments.

According to various embodiments, the first cameras 300a-1 and 300a-2 may include the capturing device 301 and the fixing device 350.

Redundant descriptions of the capturing device 301 and the fixing device 350 will be omitted.

According to various embodiments, the first cameras 300a-1 and 300a-2 may be fixed to the fixing device 350 and capture a certain area to generate the first images 1000a-1 and 1000a-2. For example, the first cameras 300a-1 and 300a-2 may be fixed and capture a certain area so as to serve as a reference for the position of the camera module 300 for generating the 3D coordinate system 1400. Accordingly, the first images 1000a-1 and 1000a-2 including a first area for determining the type of the object (e.g., the type 1200 of the first object and the type 1210 of the second object) and the position of the object (e.g., the position 1410 of the first object and the position 1420 of the second object) may be generated.

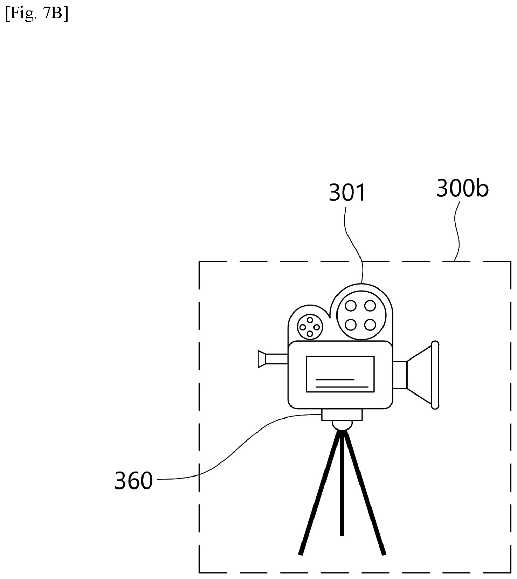

FIG. 7B is a diagram for describing the second cameras 300b-1 and 300b-2 according to various embodiments.

According to various embodiments, the second cameras 300b-1 and 300b-2 may include the capturing device 301 and the actuator 360.

Redundant descriptions of the capturing device 301 and the actuator 360 will be omitted.

According to various embodiments, the second cameras 300b-1 and 300b-2 may generate the second images 1000b-1 and 1000b-2 by performing capturing in a capturing direction and at a capturing angle corresponding to a control signal received from the server 100, by using the actuator 360. In addition, the second cameras 300b-1 and 300b-2 may be cameras having higher sharpness or resolution than the first cameras 300a-1 and 300a-2.

FIG. 7C is a diagram for describing a capturing method of the plurality of camera modules 300 (e.g., the first cameras 300a-1 and 300a-2 and the second cameras 300b-1 and 300b-2) according to various embodiments.

According to various embodiments, the camera modules 300 (e.g., the first cameras 300a-1 and 300a-2 and the second cameras 300b-1 and 300b-2) may transmit a plurality of images (e.g., the first images 1000a-1 and 1000a-2 and the second images 1000b-1 and 1000b-2) to the server 100. Accordingly, the capturing method of the camera modules 300 (e.g., the first cameras 300a-1 and 300a-2 and the second cameras 300b-1 and 300b-2) may be changed according to a control signal generated according to the transmitted plurality of images (e.g., the first images 1000a-1 and 1000a-2 and the second images 1000b-1 and 1000b-2). For example, the first cameras 300a-1 and 300a-2 may be fixed to capture a set area 710, and transmit the first images 1000a-1 and 1000a-2 including the set area to the server 100. In this case, when the server 100 identifies that the object 700 exists in the set area 710, the server 100 may transmit, to the second cameras 300b-1 and 300b-2, a control signal to capture the set area 710 with high resolution or high sharpness. Accordingly, when the second cameras 300b-1 and 300b-2 receive the control signal, the second cameras 300b-1 and 300b-2 may change the capturing direction or the capturing angle of the capturing device 301 by using the actuator 360, and adjust at least one of the shutter 340 or the image sensor 320, to capture the set area 710 with high resolution or high sharpness. However, the operations of the plurality of camera modules 300 (e.g., the first cameras 300a-1 and 300a-2 and the second cameras 300b-1 and 300b-2) are not limited to the illustrated operations, and more operations and/or fewer operations may be performed.

FIG. 8 is a flowchart for describing an example of a service in which the server 100 generates a VAR video (e.g., the graphic VAR video 1600a, the overlapped VAR video 1600b, or the changed VAR video (e.g., the first VAR video 2200a or the second VAR video 2200b)), according to various embodiments. The operations may be performed regardless of the order of the illustrated and/or described operations, and more operations and/or fewer operations may be performed.

According to various embodiments, in operation 801, the server 100 may receive a plurality of images (e.g., the first images 1000a-1 and 1000a-2 and the second images 1000b-1 and 1000b-2) from the plurality of camera modules 300 (e.g., the first cameras 300a-1 and 300a-2 and the second cameras 300b-1 and 300b-2). The operation of receiving the plurality of images (e.g., the first images 1000a-1 and 1000a-2 and the second images 1000b-1 and 1000b-2) will be specifically described later in operations 901 to 903.

According to various embodiments, in operation 803, the server 100 may determine the type of the object (e.g., the type 1200 of the first object and the type 1210 of the second object) based on the plurality of images (e.g., the first images 1000a-1 and 1000a-2 and the second images 1000b-1 and 1000b-2). The operation of determining the type of the object (e.g., the type 1200 of the first object and the type 1210 of the second object) will be specifically described later in operations 1101 to 1103.

According to various embodiments, in operation 805, the server 100 may determine the position of the object (e.g., the position 1410 of the first object and the position 1420 of the second object) in the pre-generated 3D coordinate system 1400. The operation of determining the position of the object (e.g., the position 1410 of the first object and the position 1420 of the second object) will be specifically described later in operations 1301 to 1303.

According to various embodiments, in operation 807, the server 100 may generate a VAR video (e.g., the graphic VAR video 1600a, the overlapped VAR video 1600b, or the changed VAR video (e.g., the first VAR video 2200a or the second VAR video 2200b)) based on the type of the object (e.g., the type 1200 of the first object and the type 1210 of the second object) and the position of the object (e.g., the position 1410 of the first object and the position 1420 of the second object). The operation of generating the VAR video (e.g., the graphic VAR video 1600a, the overlapped VAR video 1600b, or the changed VAR video (e.g., the first VAR video 2200a or the second VAR video 2200b)) will be specifically described later in operations 1501 to 1503 and operations 2101 to 2103.

According to various embodiments, in operation 809, the server 100 may transmit the generated VAR video (e.g., the graphic VAR video 1600a, the overlapped VAR video 1600b, or the changed VAR video (e.g., the first VAR video 2200a or the second VAR video 2200b)) to an external electronic device. The operation of transmitting the VAR video (e.g., the graphic VAR video 1600a, the overlapped VAR video 1600b, or the changed VAR video (e.g., the first VAR video 2200a or the second VAR video 2200b)) to the external electronic device will be specifically described later in operations 2105 to 2107.

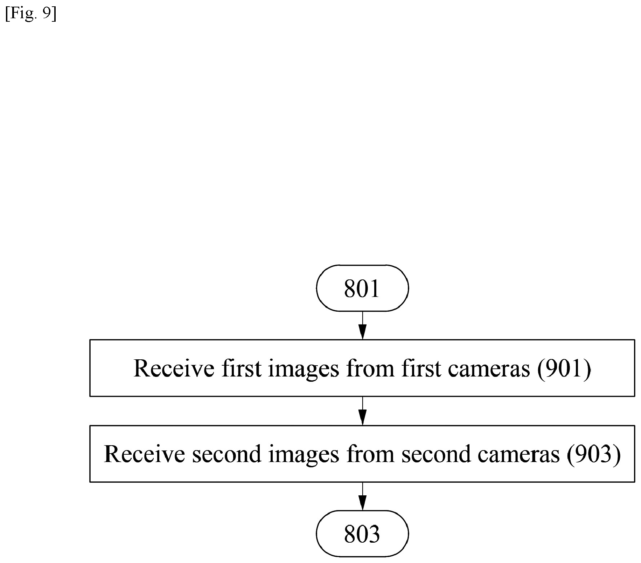

FIG. 9 is a flowchart for describing an example of a method in which the server 100 receives a plurality of images (e.g., the first images 1000a-1 and 1000a-2 and the second images 1000b-1 and 1000b-2) from the plurality of camera modules 300 (e.g., the first cameras 300a-1 and 300a-2 and the second cameras 300b-1 and 300b-2), according to various embodiments. The operations may be performed regardless of the order of the illustrated and/or described operations, and more operations and/or fewer operations may be performed. Hereinafter, FIG. 9 will be described with reference to FIG. 10.

FIG. 10 is a diagram for describing an example of a method in which the server 100 receives a plurality of images (e.g., the first images 1000a-1 and 1000a-2 and the second images 1000b-1 and 1000b-2) from the plurality of camera modules 300 (e.g., the first cameras 300a-1 and 300a-2 and the second cameras 300b-1 and 300b-2), according to various embodiments.

According to various embodiments, in operation 901, the server 100 may receive the plurality of first images 1000a-1 and 1000a-2 from the plurality of first cameras 300a-1 and 300a-2. For example, referring to FIG. 10, the server 100 may receive the first image 1000a-1 including a first area from the first camera 300a-1 capturing the first area, and receive the second image 1000a-2 including a second area from the first camera 300a-2 capturing the second area.

According to various embodiments, in operation 903, the server 100 may receive the plurality of second images 1000b-1 and 1000b-2 from the plurality of second cameras 300b-1 and 300b-2. For example, referring to FIG. 10, the server 100 may receive the second image 1000b-1 including a third area from the second camera 300b-1 capturing the third area dynamically changed according to a control signal of the server 100, and receive the second image 1000b-2 including a fourth area from the second camera 300a-2 capturing the fourth area dynamically changed according to a control signal of the server 100.

FIG. 11 is a flowchart for describing an example of a method in which the server 100 determines the type of the object (e.g., the type 1200 of the first object and the type 1210 of the second object), according to various embodiments. The operations may be performed regardless of the order of the illustrated and/or described operations, and more operations and/or fewer operations may be performed. Hereinafter, FIG. 11 will be described with reference to FIG. 12.

FIG. 12 is a diagram for describing a method in which the server 100 determines the type of the object (e.g., the type 1200 of the first object and the type 1210 of the second object), according to various embodiments.

According to various embodiments, in operation 1101, the server 100 may determine the type 1200 of the first object based on the first images 1000a-1 and 1000a-2. For example, referring to FIG. 12, the server 100 may determine, by using an artificial intelligence model for determining a person among the types of objects (e.g., the type 1200 of the first object and the type 1210 of the second object) in the first images 1000a-1 and 1000a-2, an object 700 whose type is a person among the objects 700 included in the first images 1000a-1 and 1000a-2. For the operation of determining the type of the object (e.g., the type 1200 of the first object and the type 1210 of the second object) by using the artificial intelligence model, well-known artificial intelligence models such as R-CNN, Fast R-CNN, Faster R-CNN, SSD, YOLO, convolutional neural networks (CNN), U-Net, and Mask R-CNN may be used, and thus a detailed description thereof will be omitted.

According to various embodiments, in operation 1103, the server 100 may determine the type 1210 of the second object based on the first images 1000a-1 and 1000a-2. For example, referring to FIG. 12, the server 100 may determine, by using an artificial intelligence model for determining a ball among the types of objects (e.g., the type 1200 of the first object and the type 1210 of the second object) in the first images 1000a-1 and 1000a-2, an object 700 whose type is a ball among the objects 700 included in the first images 1000a-1 and 1000a-2. For the operation of determining the type of the object (e.g., the type 1200 of the first object and the type 1210 of the second object) by using the artificial intelligence model, well-known artificial intelligence models such as R-CNN, Fast R-CNN, Faster R-CNN, SSD, YOLO, convolutional neural networks (CNN), U-Net, and Mask R-CNN may be used, and thus a detailed description thereof will be omitted.

According to various embodiments, the artificial intelligence models for determining the type 1200 of the first object and the type 1210 of the second object may be the same artificial intelligence model. In this case, operations 1101 and 1103 may be performed at the same time point.

FIG. 13 is a flowchart for describing a method in which the server 100 determines the position of the object (e.g., the position 1410 of the first object and the position 1420 of the second object), according to various embodiments. The operations may be performed regardless of the order of the illustrated and/or described operations, and more operations and/or fewer operations may be performed. Hereinafter, FIG. 13 will be described with reference to FIG. 14.

FIG. 14 is a diagram for describing a method in which the server 100 determines the position of the object (e.g., the position 1410 of the first object and the position 1420 of the second object), according to various embodiments.

According to various embodiments, in operation 1301, the server 100 may identify the object 700 from the pre-generated 3D coordinate system 1400. For example, referring to FIG. 14, the server 100 may identify a person and a ball as objects 700 whose positions are to be found in the pre-generated 3D coordinate system 1400. For the operation of identifying the object 700, well-known techniques such as R-CNN, Fast R-CNN, Faster R-CNN, SSD, YOLO, convolutional neural networks (CNN), U-Net, and Mask R-CNN may be used, and thus a detailed description thereof will be omitted.

According to various embodiments, in operation 1303, the server 100 may determine a position of the object 700 in the pre-generated 3D coordinate system 1400. For example, referring to FIG. 14, the pre-generated 3D coordinate system 1400 may include a reference point 1410. In this case, in the obtained plurality of first images 1000a-1 and 1000a-2, x and y coordinates of the plurality of first images 1000a-1 and 1000a-2 may be obtained by using stored positions of the plurality of first cameras 300a-1 and 300a-2. Accordingly, a z coordinate may be obtained by using the reference point 1410, the x coordinate, and the y coordinate, so that entire coordinates of the plurality of first images 1000a-1 and 1000a-2 at a specific time point may be determined. The position of the object (e.g., the position 1410 of the first object and the position 1420 of the second object) may be determined by matching the object 700 with the entire coordinates. For the operation of determining the 3D coordinates, well-known techniques such as a programming language, triangulation, 3D scanning, LiDAR, time of flight (ToF), and stereo vision may be used, and thus a detailed description thereof will be omitted.

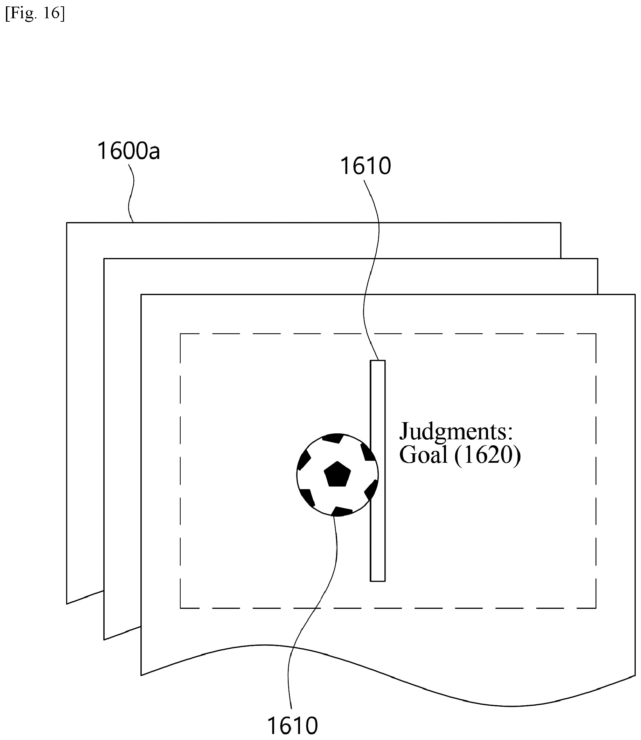

FIG. 15 is a flowchart for describing a method in which the server 100 generates the graphic VAR video 1600a, according to various embodiments. The operations may be performed regardless of the order of the illustrated and/or described operations, and more operations and/or fewer operations may be performed. Hereinafter, FIG. 15 will be described with reference to FIG. 16.

FIG. 16 is a diagram for describing a method in which the server 100 generates the graphic VAR video 1600a, according to various embodiments.

According to various embodiments, in operation 1501, the server 100 may analyze data based on the type of the object (e.g., the type 1200 of the first object and the type 1210 of the second object) and the position of the object (e.g., the position 1410 of the first object and the position 1420 of the second object). For example, referring to FIG. 16, when a position of a ball and a position of a goalpost among the plurality of objects 700 are determined, and the determined position of the ball completely crosses a line of the goalpost, the server 100 may analyze that a goal event has occurred. As another example, when positions of a plurality of persons among the plurality of objects 700 overlap, the server 100 may determine positions between the persons according to time points and feature point information of the persons, and analyze that a foul event has occurred. However, the analysis is not limited to the above-described data analysis operations, and more various types of data analysis operations capable of performing analysis based on the type of the object (e.g., the type 1200 of the first object and the type 1210 of the second object) and the position of the object (e.g., the position 1410 of the first object and the position 1420 of the second object) after setting rules and behaviors in advance may be included. For the operation of recognizing the gesture, well-known techniques for recognizing gestures, such as vision-based gesture recognition, may be used, and thus a detailed description thereof will be omitted. In addition, for the operation of determining the feature point information, well-known techniques such as scale-invariant feature transform (SIFT), speeded up robust features (SURF), oriented FAST and rotated BRIEF (ORB), Gabor filter, Harris corner detector, local binary pattern (LBP), and histogram of oriented gradients (HOG) may be used, and thus a detailed description thereof will be omitted.

According to various embodiments, in operation 1503, the server 100 may generate the graphic VAR video 1600a based on the type of the object (e.g., the type 1200 of the first object and the type 1210 of the second object), the position of the object (e.g., the position 1410 of the first object and the position 1420 of the second object), and the analysis data 1620. For example, referring to FIG. 16, the server 100 may generate, by using a first artificial intelligence model, the graphic VAR video 1600a including a graphic 1610 corresponding to the type of the object (e.g., the type 1200 of the first object and the type 1210 of the second object) and the position of the object (e.g., the position 1410 of the first object and the position 1420 of the second object). In this case, the first artificial intelligence model may be trained to generate the graphic VAR video 1600a including the graphic 1610 corresponding to the type of the object (e.g., the type 1200 of the first object and the type 1210 of the second object) and the position of the object (e.g., the position 1410 of the first object and the position 1420 of the second object). As another example, when the type 1200 of the first object is a goalpost and the type 1210 of the second object is a ball, the server 100 may generate, by using the first artificial intelligence model, the graphic VAR video 1600a including a graphic 1610 corresponding to the ball and a graphic 1610 corresponding to the goalpost. In this case, the graphic VAR video 1600a may be changed by including the analysis data 1620 obtained by analyzing the goal event analyzed in operation 1501. However, when the analysis data 1620 is not included in the graphic VAR video 1600a, operation 1501 may be omitted. For the artificial intelligence model, well-known artificial intelligence models such as real-time graphics, generative adversarial networks (GANs), variational autoencoders (VAEs), image-to-image translation, Pix2Pix, CycleGAN, neural style transfer, and 3D ShapeNets may be used, and thus a detailed description thereof will be omitted.

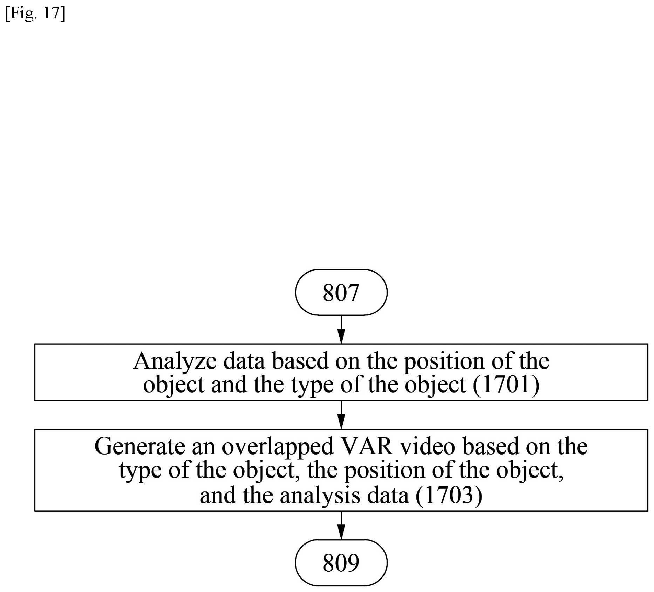

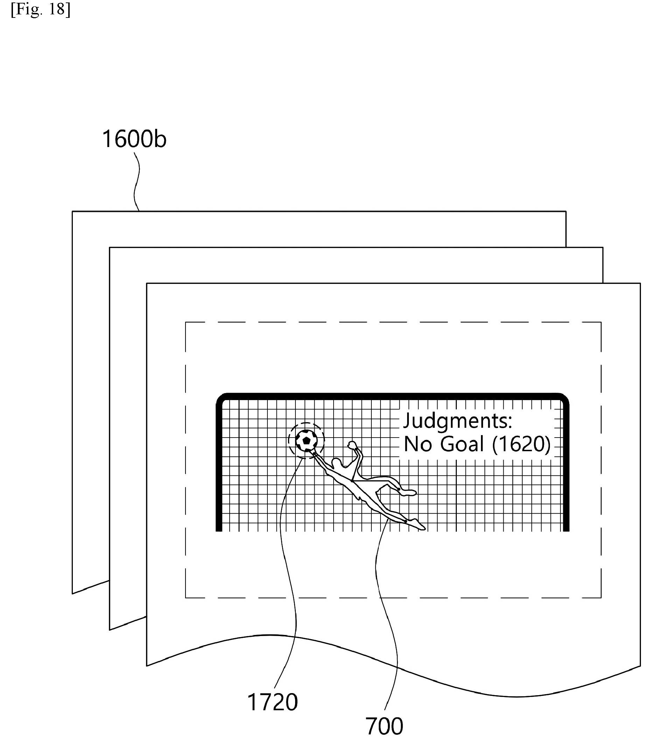

FIG. 17 is a flowchart for describing a method in which the server 100 generates the overlapped VAR video 1600b, according to various embodiments. The operations may be performed regardless of the order of the illustrated and/or described operations, and more operations and/or fewer operations may be performed. Hereinafter, FIG. 17 will be described with reference to FIG. 18.

FIG. 18 is a diagram for describing a method in which the server 100 generates the overlapped VAR video 1600b, according to various embodiments.

According to various embodiments, in operation 1701, the server 100 may analyze data based on the type of the object (e.g., the type 1200 of the first object and the type 1210 of the second object) and the position of the object (e.g., the position 1410 of the first object and the position 1420 of the second object). Operation 1701 may be implemented in the same manner as operation 1501, and thus redundant descriptions will be omitted.

According to various embodiments, in operation 1703, the server 100 may generate the overlapped VAR video 1600b based on the type of the object (e.g., the type 1200 of the first object and the type 1210 of the second object), the position of the object (e.g., the position 1410 of the first object and the position 1420 of the second object), and the analysis data 1620. For example, referring to FIG. 18, the server 100 may generate the overlapped VAR video 1600b by overlapping an auxiliary object 1720 on the object 700 included in the received second images 1000b-1 and 1000b-2, by using a second artificial intelligence model. In this case, the server 100 may train the second artificial intelligence model to overlap the type and position of the auxiliary object 1720 based on a set rule or a behavior of the object 700. As another example, by using the second artificial intelligence model, when the type 1200 of the first object is a ball and the type 1210 of the second object is a person, the overlapped VAR video 1600b may be generated in which an auxiliary object 1720 having a shape surrounding an edge of the ball is overlapped on the ball, and an auxiliary object 1720 connecting feature points is overlapped on the person. However, the shapes are not limited to the described examples, and more various shapes of the auxiliary object 1720 for assisting a decision may be included. In this case, the overlapped VAR video 1600b may be changed by including the analysis data 1620 obtained by analyzing the goal event analyzed in operation 1701. However, when the analysis data 1620 is not included in the overlapped VAR video 1600b, operation 1701 may be omitted. For the artificial intelligence model, well-known artificial intelligence models such as real-time graphics, generative adversarial networks (GANs), variational autoencoders (VAEs), image-to-image translation, Pix2Pix, CycleGAN, neural style transfer, and 3D ShapeNets may be used, and thus a detailed description thereof will be omitted.

FIG. 19 is a flowchart for describing a method in which the server 100 transmits, to the user terminal 200, a VAR video (e.g., the graphic VAR video 1600a, the overlapped VAR video 1600b, or the changed VAR video (e.g., the first VAR video 2200a or the second VAR video 2200b)) for which there is a reception request of a user, according to various embodiments. The operations may be performed regardless of the order of the illustrated and/or described operations, and more operations and/or fewer operations may be performed. Hereinafter, FIG. 19 will be described with reference to FIG. 20.

FIG. 20 is a diagram for describing a method in which the server 100 transmits, to the user terminal 200, a VAR video (e.g., the graphic VAR video 1600a, the overlapped VAR video 1600b, or the changed VAR video (e.g., the first VAR video 2200a or the second VAR video 2200b)) for which there is a reception request of a user, according to various embodiments.

According to various embodiments, in operation 1901, when receiving a reception request of the user terminal 200 for a specific VAR video (e.g., the graphic VAR video 1600a, the overlapped VAR video 1600b, or the changed VAR video (e.g., the first VAR video 2200a or the second VAR video 2200b)), the server 100 may determine the specific VAR video (e.g., the graphic VAR video 1600a, the overlapped VAR video 1600b, or the changed VAR video (e.g., the first VAR video 2200a or the second VAR video 2200b)). For example, referring to FIG. 20, the server 100 may receive a request for a specific VAR video (e.g., the graphic VAR video 1600a, the overlapped VAR video 1600b, or the changed VAR video (e.g., the first VAR video 2200a or the second VAR video 2200b)) associated with a specific rule, based on an input of a selection interface of the user terminal 200. As another example, referring to FIG. 20, when receiving a reception request for a VAR video (e.g., the graphic VAR video 1600a, the overlapped VAR video 1600b, or the changed VAR video (e.g., the first VAR video 2200a or the second VAR video 2200b)) for assisting goal-line determination based on an input of a goal-line interface among the selection interfaces, the server 100 may determine a VAR video (e.g., the graphic VAR video 1600a, the overlapped VAR video 1600b, or the changed VAR video (e.g., the first VAR video 2200a or the second VAR video 2200b)) capable of assisting goal-line determination. As another example, when receiving, based on an input of a setting interface among the selection interfaces, a reception request for a VAR video (e.g., the graphic VAR video 1600a, the overlapped VAR video 1600b, or the changed VAR video (e.g., the first VAR video 2200a or the second VAR video 2200b)) in which a type of the VAR video (e.g., the graphic VAR video 1600a, the overlapped VAR video 1600b, or the changed VAR video (e.g., the first VAR video 2200a or the second VAR video 2200b)), whether the auxiliary object 1720 is included, and whether the analysis data 1620 is included are changed, the server 100 may determine, as the specific VAR video (e.g., the graphic VAR video 1600a, the overlapped VAR video 1600b, or the changed VAR video (e.g., the first VAR video 2200a or the second VAR video 2200b)), a VAR video (e.g., the graphic VAR video 1600a, the overlapped VAR video 1600b, or the changed VAR video (e.g., the first VAR video 2200a or the second VAR video 2200b)) in which the type of the VAR video (e.g., the graphic VAR video 1600a, the overlapped VAR video 1600b, or the changed VAR video (e.g., the first VAR video 2200a or the second VAR video 2200b)), whether the auxiliary object 1720 is included, or whether the analysis data 1620 is included is changed.

According to various embodiments, in operation 1903, the server 100 may transmit, to the user terminal 200, the VAR video (e.g., the graphic VAR video 1600a, the overlapped VAR video 1600b, or the changed VAR video (e.g., the first VAR video 2200a or the second VAR video 2200b)) determined in operation 1901. For example, referring to FIG. 20, when a VAR video (e.g., the graphic VAR video 1600a, the overlapped VAR video 1600b, or the changed VAR video (e.g., the first VAR video 2200a or the second VAR video 2200b)) capable of assisting goal-line determination is determined as the specific VAR video (e.g., the graphic VAR video 1600a, the overlapped VAR video 1600b, or the changed VAR video (e.g., the first VAR video 2200a or the second VAR video 2200b)), the server 100 may transmit, to the user terminal 200, the VAR video (e.g., the graphic VAR video 1600a, the overlapped VAR video 1600b, or the changed VAR video (e.g., the first VAR video 2200a or the second VAR video 2200b)) capable of assisting goal-line determination. As another example, when a VAR video (e.g., the graphic VAR video 1600a, the overlapped VAR video 1600b, or the changed VAR video (e.g., the first VAR video 2200a or the second VAR video 2200b)) in which the analysis data 1620 is removed from the graphic VAR video 1600a capable of assisting goal-line determination is determined as the specific VAR video (e.g., the graphic VAR video 1600a, the overlapped VAR video 1600b, or the changed VAR video (e.g., the first VAR video 2200a or the second VAR video 2200b)), the server 100 may transmit, to the user terminal 200, the VAR video (e.g., the graphic VAR video 1600a, the overlapped VAR video 1600b, or the changed VAR video (e.g., the first VAR video 2200a or the second VAR video 2200b)) in which the analysis data 1620 is removed from the graphic VAR video 1600a capable of assisting goal-line determination.

FIG. 21 is a flowchart for describing a method in which the server 100 transmits, to the user terminal 200, a VAR video (e.g., the graphic VAR video 1600a, the overlapped VAR video 1600b, or the changed VAR video (e.g., the first VAR video 2200a or the second VAR video 2200b)) based on information associated with the user terminal 200, according to various embodiments. The operations may be performed regardless of the order of the illustrated and/or described operations, and more operations and/or fewer operations may be performed. Hereinafter, FIG. 21 will be described with reference to FIG. 22.

FIG. 22 is a diagram for describing a method in which the server 100 transmits, to the user terminal 200, a VAR video (e.g., the graphic VAR video 1600a, the overlapped VAR video 1600b, or the changed VAR video (e.g., the first VAR video 2200a or the second VAR video 2200b)) based on information associated with the user terminal 200, according to various embodiments.

According to various embodiments, information associated with a first user terminal 200a and a second user terminal 200b may be identified. For example, the server 100 may identify at least one element of an operating system, settings of the application 240, a CPU, a RAM, a memory, a battery, a network type, a network speed, network available resources, a subscription status, or security of the first user terminal 200a, and at least one element of an operating system, settings of the application 240, a CPU, a RAM, a memory, a battery, a network type, a network speed, network available resources, a subscription status, or security of the second user terminal 200b. However, the identification is not limited to the described examples, and more various information associated with the user terminal 200 may be identified.

According to various embodiments, in operation 2103, the server 100 may generate the first VAR video 2200a and the second VAR video 2200b based on the identified information. For example, referring to FIG. 22, when identifying the network speed of the first user terminal 200a, the server 100 may generate the first VAR video 2200a in which a data size of the graphic VAR video 1600a is compressed to a data size corresponding to the network speed. As another example, referring to FIG. 22, when identifying the subscription status of the second user terminal 200b and identifying a non-subscription state of the second user terminal, the server 100 may insert an advertisement into the graphic VAR video 1600a to generate the second VAR video. However, the generation is not limited to the described examples of the operation of generating the first VAR video 2200a and the second VAR video 2200b, and the first VAR video 2200a and the second VAR video 2200b corresponding to the information associated with the user terminal 200 may be generated.

According to various embodiments, in operation 2105, the server 100 may transmit the generated first VAR video 2200a to the first user terminal 200a. For example, referring to FIG. 22, when the first VAR video 2200a is the graphic VAR video 1600a compressed corresponding to the network speed of the first user terminal 200a, the server 100 may transmit the first VAR video 2200a to the first user terminal 200a.

According to various embodiments, in operation 2107, the server 100 may transmit the generated second VAR video 2200b to the second user terminal 200b. For example, referring to FIG. 22, when the second VAR video 2200b is the graphic VAR video 1600a into which an advertisement is inserted corresponding to the non-subscription state of the second user terminal 200b, the server 100 may transmit the second VAR video 2200b to the first user terminal 200a. By transmitting the first VAR video 2200a to the first user terminal 200a and transmitting the second VAR video 2200b to the second user terminal 200b, each user is provided with a different VAR video (e.g., the graphic VAR video 1600a, the overlapped VAR video 1600b, or the changed VAR video (e.g., the first VAR video 2200a or the second VAR video 2200b)), thereby having diversity of being provided with a customized video.

## Claims

1. A method of operating an electronic device, the method comprising:
receiving a plurality of images from a plurality of cameras;
determining, based on the plurality of images, types of objects included in the plurality of images;
determining positions of the objects in a pre-generated 3D coordinate system;
generating a VAR video based on the determined types of the objects and the determined positions of the objects; and
transmitting the generated VAR video to an external electronic device.

2. The method of claim 1, wherein the receiving of the plurality of images comprises:
receiving first images obtained by using a plurality of fixed first cameras; and
receiving second images obtained by using a plurality of second cameras,
wherein the plurality of second cameras are operated by a control signal transmitted from the electronic device.

3. The method of claim 1, wherein the generating of the VAR video comprises generating a graphic video based on the type of the object and the position of the object.

4. The method of claim 1, wherein the generating of the VAR video comprises generating a video in which an auxiliary object is overlapped on at least one image among the received plurality of images.

5. The method of claim 3 or 4, wherein the VAR video comprises analysis data associated with the object.

6. The method of claim 2, wherein, when the position of the object is included in a set area, the plurality of second cameras perform capturing to include the set area.

7. A server comprising:
a communication circuit;
a memory; and
at least one processor,
wherein the at least one processor is implemented to:
receive a plurality of images from a plurality of cameras through the communication circuit;
determine, based on the plurality of images, types of objects included in the plurality of images;
determine positions of the objects in a pre-generated 3D coordinate system;
generate a VAR video based on the determined types of the objects and the determined positions of the objects; and
transmit the generated VAR video to an external electronic device.

8. The server of claim 7, wherein the at least one processor is implemented to, as at least a part of the receiving of the plurality of images:
receive first images obtained by using a plurality of fixed first cameras; and
receive second images obtained by using a plurality of second cameras,
wherein the plurality of second cameras are operated by a control signal transmitted from the electronic device.

9. The server of claim 7, wherein the at least one processor is implemented to, as at least a part of the generating of the VAR video, generate a graphic video based on the type of the object and the position of the object.

10. The server of claim 7, wherein the at least one processor is implemented to, as at least a part of the generating of the VAR video, generate a video in which an auxiliary object is overlapped on at least one image among the received plurality of images.

11. The server of claim 9 or 10, wherein the VAR video comprises analysis data associated with the object.

12. The server of claim 8, wherein, when the position of the object is included in a set area, the plurality of second cameras perform capturing to include the set area.

13. A non-transitory recording medium storing at least one program executable by a computer, the non-transitory recording medium being implemented such that, when the at least one program is executed, at least one processor:
receives a plurality of images from a plurality of cameras through a communication circuit;
determines, based on the plurality of images, types of objects included in the plurality of images;
determines positions of the objects in a pre-generated 3D coordinate system;
generates a VAR video based on the determined types of the objects and the determined positions of the objects; and
transmits the generated VAR video to an external electronic device.
